# EUROPEAN PATENT APPLICATION

(11) **EP 1 595 915 A1**
(43) Date of publication of application: **16.11.2005**
(21) Application number: 05103795.0
(22) Date of filing: 09.05.2005
(51) Int. Cl.: C08L 23/16, C08L 23/10

(54) **Elastomeric pellets comprising ep(d)m polymers with a high propylene content and process for its preparation thereof**

(30) Priority: 11.05.2004 IT MI20040938
(71) Applicant: Polimeri Europa S.p.A., 72100 Brindisi (IT)
(72) Inventor: Lori, Domenico, 44100, Ferrara (IT)
(74) Representative: De Gregori, Antonella

(57) **Abstract**

Elastomeric pellets are described, comprising:
(A) EP(D)M elastomeric polymer having a content of bound propylene of at least 30% by weight, preferably from 31% to 40% by weight;
(B) polyethylene
the weight ratio between the two components (A)/(B) ranging from 80/20 to 95/5, preferably from 85/15 to 88/12.

Their preparation is also described, together with their use as components of impact-resistant compositions.

## Description

The present invention relates to a process for pelletizing EP(D)M polymers or ethylene/propylene copolymers (EPM polymers) and ethylene/propylene/diene terpolymers (EPDM polymers), having a high propylene content. The present invention also relates to elastomeric pellets comprising EP(D)M polymers with a high propylene content.

It is known that polypropylene has extremely attractive characteristics such as a high rigidity, good resistance to temperature and good processability characteristics by both injection and extrusion.

Among the most negative aspects, however, shown by polypropylene, in particular polypropylene homopolymer, there is the low impact resistance, above all at low temperatures.

This characteristic is improved by the addition of modifiers (for example elastomers, plastomers, LLDE, HDPE, LDPE, LLDPE), effected during the extrusion phase of polypropylene with a mono or twin screw. This gives rise to a new group of products called thermoplastic olefins (TPO).

TPOs are produced, which are used in a very wide range of applications relating to internal and external parts of the car industry.

The TPOs used for each application must have a series of performances and consequently respect the specifications imposed by car manufacturers through a balance of properties.

This balance of properties is naturally determined according to the type and quantity of elastomer used, and by the quantity used which determines the characteristics relating to impact resistance, rigidity (MEF) and resistance to temperature (Vicata, HDT), linear shrinkage, ultimate tensile strength, ultimate elongation, etc.

As a general trend, car industries request TPOs with a high Melt flow index as the parts which are moulded, with particular reference to bumpers, are becoming increasingly larger and it is therefore necessary to use TPOs with a high fluidity for filling the moulds.

For each type or rather for each series of polypropylenes which differ in various fluidity characteristics, it is necessary to use a compatible elastomer whose solubility parameters (apparent density vs temperature) are as close as possible to the matrix which is modified, for producing TPOs.

This means that it is necessary to have a series of elastomers with differing compositions (monomer/comonomer ratio), molecular weights and molecular weight distributions.

Furthermore, depending on the transformation technologies for producing TPOs (bambury, single-screw and twin-screw draw-plates), the elastomers must be available in a different physical form which ranges from cakes, master-batches and pellets.

Masters are materials based on elastomers with a high content of bound comonomer (in particular propylene) which cannot be produced in pellet form as they are tacky and for this reason (and this is undoubtedly a disadvantage) are blended with polyolefins whose content is normally less than 40%.

Elastomers in pellet form, on the other hand, are materials with a low content of bound propylene, semicrystalline and with a different molecular weight. In order to be pelletized, the above materials must have a propylene content lower than 30% by weight; they would otherwise be tacky and there would consequently be problems of agglomeration and loss of the free flowing properties of the granules.

The necessity is therefore felt for succeeding in pelletizing EP(D)M polymers having a propylene content of at least 30% by weight.

A process has now been found, which overcomes the above drawbacks as it allows EP(D)M polymers to be obtained in the form of pellets, having a propylene content of at least 30% by weight.

In accordance with this, the present invention relates to elastomeric pellets comprising:
(A) an EP(D)M elastomeric polymer having a content of bound propylene of at least 30% by weight, preferably from 31% to 40% by weight;
(B) polyethylene;
the weight ratio between the two components (A) / (B) ranging from 80/20 to 95/5, preferably from 85/15 to 88/12.

The term "elastomeric pellets" refers to regular-shaped granules having elastomeric properties, in which the weight of 30 granules normally ranges from 0.4 to 0.5 grams.

The term EP(D)M refers both to EPM (ethylene-propylene) copolymers and to EPDM terpolymers (ethylene-propylene-non-conjugated diene terpolymers). The possible non-conjugated diene is present in a maximum quantity of 12% by weight, preferably 5% by weight. In addition, EP(D)M polymers have the following properties:
** Weight average molecular weight (M_{w}) ranging from 70,000 to 500,000, preferably from 90,000 to 450,000;
** Polydispersity expressed as M_{w}/Mₙ lower than 5, preferably from 1.8 to 4.9.

The molecular weight M_{w} is determined by means of GPC with a refraction index detector.

In the case of EPDM terpolymers, the diene is selected from:
-- linear chain dienes such as 1,4-hexadiene and 1,6-octadiene;
-- acyclic branched chain dienes such as 5-methyl-1,4-hexadiene; 3,7-dimethyl-1,6-octadiene; 3,7-dimethyl-1,7-octadiene;
-- alicyclic single ring dienes such as 1,4-cyclohexadiene; 1,5-cyclo-octadiene; 1,5-cyclododecadiene;
-- dienes having condensed and bridged alicyclic rings, such as methyltetra-hydroindene; dicyclopentadiene; bicyclo[2.2.1]hepta-2,5-diene; alkenyl, alkylidene, cycloalkenyl and cyclo-alkylidene norbornenes such as 5-methylene-2-norbornene; 5-ethylidene-2-norbornene (ENB); 5-propenyl-2-norbornene.

In the preferred embodiment, the diene is 5-ethylidene-2-norbornene (ENB).

In the preferred embodiment, the EP(D)M polymer is selected from EPM polymers, i.e. ethylene/propylene copolymers.

As far as the polyethylene is concerned, various types of polyethylenes can be used, i.e. LDPE, HDPE, LLDPE, VLLDPE. In the preferred embodiment LLDPE is used, having a melt flow rate at 190°C/2.16 Kg ranging from 10 to 13 and a density at 23°C of about 0.91 gr/cm³.

The elastomeric pellets of the present invention can contain inert material (for example talc, calcium carbonate, kaolin) up to a maximum of 20%, and paraffinic oil up to a maximum of 10%.

The present invention also relates to a process for the preparation of the pellets defined above, which comprises the treatment of one or more peroxides, under high shear conditions, at a temperature ranging from 180°C to 260°C, preferably from 200°C to 240°C, of an elastomeric composition comprising:
i) a first elastomer (A) selected from EP(D)M polymers having a content of bound propylene ranging from 22% to 35% by weight, preferably from 26% to 30% by weight;
ii) a second elastomer (B) selected from EP(D)M polymers having a content of bound propylene ranging from 45% to 55% by weight, preferably from 49% to 52% by weight;
iii) polyethylene;
the quantity of the above components, their sum being 100, being:
** elastomer (A) from 40 to 60% by weight, preferably from 45 to 55% by weight;
** elastomer (B) from 35 to 55% by weight, preferably from 38 to 42% by weight;
** polyethylene from 5 to 15% by weight, preferably from 7 to 13% by weight.

As far as the elastomer A is concerned, this is selected from EP(D)M polymers having from 30 to 40% by weight of bound propylene, a melt flow rate at 230°C at 2.16 Kg g/10' ranging from 1 to 8, a Mooney viscosity (1+4) 100°C ranging from 10 to 100, an intrinsic viscosity measured at 135°C ranging from 1.5 to 2.5 and an M_{w}/Mₙ lower than 3.

With respect to the elastomer B, this is selected from EP(D)M polymers having a content of bound propylene ranging from 40 to 50% by weight, a melt flow rate at 230°C at 2.16 Kg g/10' ranging from 0.5 to 7, a Mooney viscosity (1+4)100°C ranging from 20 to 100, an intrinsic viscosity measured at 135°C ranging from 1.5 to 3 and an M_{w}/Mₙ lower than 3.

In the preferred embodiment, both the elastomer (A) and the elastomer (B) are selected from EPM polymers, or ethylene/propylene copolymers.

In the preferred embodiment, the polyethylene is selected from the various types of polyethylene, i.e. LDPE, HDPE, LLDPE, VLLDPE. In the preferred embodiment, LLDPE is used, having a melt flow rate at 190°C/2.16 Kg within the range of 10-13 and a density at 23°C of about 0.91 gr/cm³.

The process of the present invention is effected by treating the elastomeric composition defined above with one or more peroxides in a quantity ranging from 0.2 to 5% by weight, preferably from 0.5 to 3%.

The EP(D)M polymers and polyethylene are defined above.

With respect to the peroxides which can be used in the process of the present invention, typical examples are dicumyl peroxide, di-t-butylperoxide, α,α'-di(t-butyl-peroxy)diisopropyl)benzene, 2,5-dimethyl-2,5-di(t-butyl-peroxy)hexane, 1,1-dibutylperoxy-3,3,5-trimethylcyclohexane.

As far as the high shear conditions at which the process takes place, are concerned, these range from 500 sec⁻¹ to 1,000 sec⁻¹, preferably from 400 sec⁻¹ to 700 sec⁻¹. The above shear conditions can be obtained by using co-rotating twin-screw extruders, for example ICMA, BANDERA, WERNER etc.

The process of the present invention allows elastomers to be produced in pellet form and free flowing with a high content of bound propylene (30-50% by weight), through a branching in dynamic phase during extrusion in the presence of peroxide.

As can be clearly observed in the experimental part, the branched product thus obtained shows a structural modification with respect to the same non-modified product.

The elastomeric pellets obtained with the process of the present invention can be particularly used for the modification of thermoplastic polyolefins (TPO) with a very high impact resistance; furthermore, the above pellets are capable of being dispersed with any type of polyolefins, with particular reference to polypropylene homo- and copolymer at different fluidities (MFR at 230°C/2.15 Kg from 1 to 50). The selection and use of more elastomers depending on the fluidity and compatibility of the polyolefin to be modified, are consequently no longer necessary.

The process of the present invention allows the molecular weight to be increased without influencing the compatibility of the elastomer in the modification of polyolefins. The elastomer obtained with the process of the present invention therefore confers to polyolefins, particularly polypropylene, higher impact-resistance properties than any other known elastomer (see experimental part).

In accordance with this, the present invention also relates to the use of the elastomeric composition according to claim 1, as an improver of the impact-resistance properties of polyalpha-olefins, particularly polypropylene.

More specifically, the impact-resistant compositions mentioned above comprise polyolefins, particularly polypropylene, in a quantity ranging from 50% by weight to 95% by weight, preferably from 70% by weight to 90% by weight, the complement to 100 consisting of the material according to claim 1.

The impact-resistant compositions can also comprise, in addition to the two main components indicated above, other ingredients such as mineral and organic fillers, antioxidants, various kinds of polymers, oils and plasticizers.

Figure 1 represents the tan δ vs. rad/sec curve of the branched elastomeric composition of the present invention compared with the starting linear elastomeric composition.

Figure 2 represents the rheological curve of the branched elastomeric composition of the present invention, compared with the starting linear elastomeric composition.

The following examples are provided for a better understanding of the present invention.

### EXAMPLES

### MATERIALS used

A composition (A+B+C) is used, in which, the sum (A+B+C) being 100, A is present in a quantity of 50% by weight, B 40% by weight and C 10% by weight.
**A)** Ethylene-propylene EPM copolymer having a content of bound propylene of 28%, a Mooney viscosity at 100°C = 44, M_{w}/Mₙ = 2.6
**B)** Ethylene-propylene EPM copolymer having a content of bound propylene of 50%, a Mooney viscosity at 125°C = 60, M_{w}/Mₙ = 2.2
**C)** Clearflex^{R} MQ BO (LLDPE) polyethylene, Melt Flow Rate at 190°C - 2.16 Kg = 13, density at 23°C = 0.91
**D)** Peroximon^{R} S 101 or 1,1-di-butylperoxy-3,3,5-trimethylcyclohexane. This peroxide is used in a quantity of 1% by weight with respect to the sum (A+B+C).

### PROCESS

The structural modification in dynamic phase of the ethylene/propylene copolymers described above was obtained in extrusion using an ICMA co-rotating extruder with 140 diameters having a screw profile with three high shear mixing zones and at a rotation rate (rpm) of 120, by the addition of peroxide in a quantity of 1% by weight with respect to the components (A+B+C).

The thermal profile of the draw-plate is as follows:

| | (°C) |
|---|---|
| zone 1 | 200 |
| zone 2 | 240 |
| zone 3 | 240 |
| zone 4 | 240 |
| zone 5 | 230 |
| zone 6 | 220 |
| zone 7 | 210 |
| zone 8 | 200 |

The head pressure is 130 Kg/cm² and the extrusion flow-rate is 650 Kg/hour.

The dosage of the elastomers A and B takes place through the use of two gravimetric scales. Another gravimetric scale was used for the dosage of the polyethylene C, all effected with a quantity control computerized system.

The addition of the peroxide is carried out using a volumetric balance which doses the desired quantity of peroxide and which is also under a computerized system. The peroxide is immersed in the extruder through a hopper positioned after the feeding zone of the elastomers and polyethylene.

### Results of the experiment

This process allows elastomers to be obtained in the form of free flowing pellets with a high content of bound propylene through a branching in dynamic phase during the extrusion phase with the addition of peroxide.

It should be pointed out that the starting elastomeric composition (i.e. not branched) would immediately create irreversible problems of agglomeration should an attempt at pelletization be made.

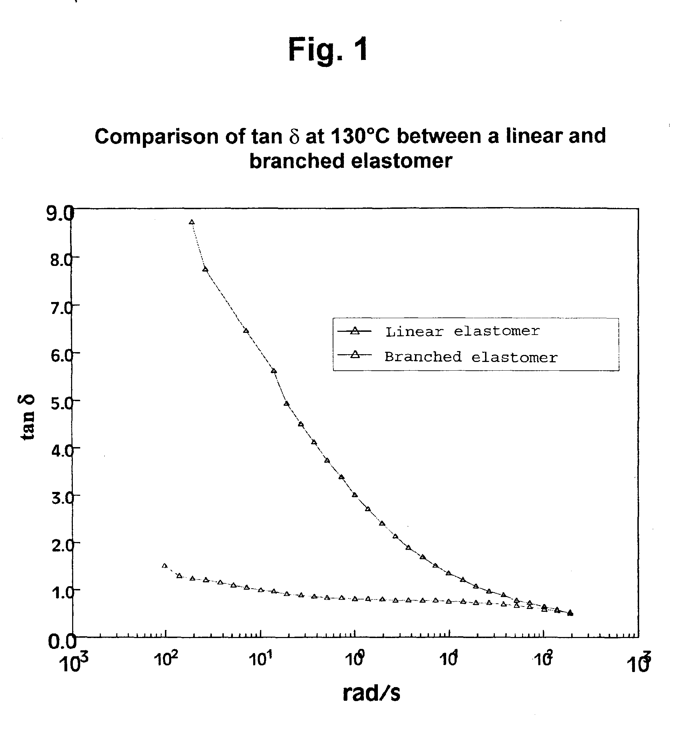

The branched product shows a structural modification with respect to the same non-modified product. It does in fact demonstrate (see figure 1) a high elasticity (crossover of the dynamic modules shifted to low frequencies as can be observed from DMTA measurements, or torsional mechanical analysis).

Moreover, the greatest high frequency disentanglement peak indicates the presence of higher molecular weights with respect to the same non-modified product (Figure 1).

Compared with the non-branched product, the lowering of the tan-δ curve (fig. 1) is considerable, confirming the completion of the structural modification.

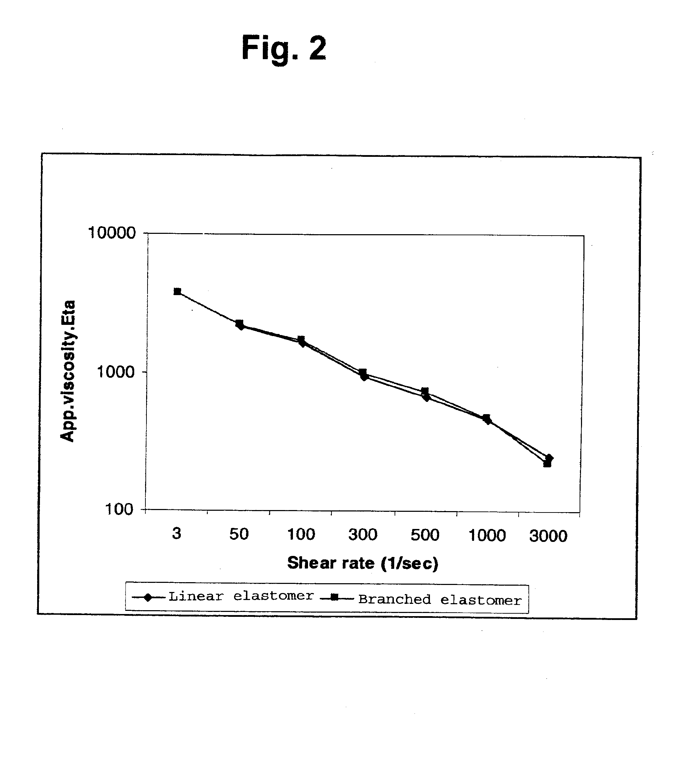

Although the branching lowers the free flowing characteristics of the elastomer (measured with a melt flow index, MFI), the product demonstrates a rheological behaviour (see figure 2) equivalent to the non-branched product.

Table 1 shows the fluidity and Mooney characteristics of the elastomeric product obtained with the process of the present invention (branched elastomer) compared with the characteristics of the starting elastomeric composition (linear elastomer).

**TABLE 1**

| **Elastomer** | **Branched** | **Linear** |
|---|---|---|
| **ML(1+4)100°C/125°C** | **56/30** | **49/24** |
| **Melt flow index at 230°C/2.16 Kg gr/10'** | **0.45** | **1.8** |
| **Melt flow index at 230°C/5 Kg gr/10'** | **2.0** | **4.9** |
| **Melt flow index at 230°C/21.6 Kg gr/10'** | **36** | **42** |

From the data of Table 1 and figures 1 and 2, it is therefore evident that this technique allows products to be obtained in the form of pellets, which are rheologically compatible with any type of polyolefin (Melt flow index from 1 to 50). Furthermore, the increase in molecular weight due to the branching considerably increases the impact resistance with respect to any other known EPR elastomer.

### EVALUATION AS POLYPROPYLENE MODIFIER

The evaluation of the branched elastomer was effected in the modification of three polypropylenes with a melt flow index of 13, 20 and 45 respectively, compared with elastomers with a low content of bound propylene (26-28%) with a low and high molecular weight, and also compared with high molecular weight elastomers with a high content of bound propylene (40-42% by weight).

For this evaluation, a Maris co-rotating twin-screw laboratory draw-plate was used, having a polypropylene screw profile, of 35 diameters with a screw rotation rate (rpm) of 150 and a flow-rate of 10/12 Kg/hour.

The blends (branched product in pellets of the present invention + polypropylene) are moulded by means of a Negri-Bossi injection press at a temperature of 200°C.

Table 2 indicates the characteristics of the various EPMs used, one (the branched EPM) obtained according to the process of the present invention, the other four (10-13 for comparative purposes.

Table 3, on the other hand, provides the characterizations of a polypropylene containing 20% by weight of the elastomeric composition of the present invention, compared with the same polypropylene containing 20% by weight of the various EPM indicated above.

Table 4 specifies the characterizations of a different polypropylene containing 30% by weight of the elastomeric composition of the present invention, compared with the same polypropylene containing 30% by weight of the various EPM indicated above.

Table 5 indicates the characterizations of a last polypropylene (with a melt flow index of 45) containing 20% by weight of the elastomeric composition of the present invention, compared with the same polypropylene containing 20% by weight of the various EPM specified above.

**TABLE 2**

| **Polymer** | **Propylene wt %** | **ML(1+4)100°C** | **ML(1+4)125°C** | **M**_{**w**}**/M**_{**n**} |
|---|---|---|---|---|
| **Branched** | **38** | **56** | | **Narrow** |
| **Polymer 10** | **27** | | **60** | **Narrow** |
| **Polymer 11** | **42** | | **75** | **Medium** |
| **Polymer 12** | **27** | **36** | | **Narrow** |
| **Polymer 13** | **50** | | **60** | **Narrow** |

**TABLE 3**

| Concentration of elastomer 20% by weight | | | | | |
|---|---|---|---|---|---|
| | **Branched** | **Pol. 10** | **Pol. 11** | **Pol. 12** | **Pol. 13** |
| **MFI 230°C 2.16 Kg** | **7** | **7** | **6** | **8** | **7** |
| **5.00 Kg** | **30** | **30** | **28** | **36** | **30** |
| **Vicat 1 kg (°C)** | **134** | **134** | **132** | **135** | **133** |
| **HDT 0.46 MpA (°C)** | **81** | **80** | **79** | **80** | **78** |
| **Izod notched** | | | | | |
| **23°C J/m** | **740** | **630** | **660** | **640** | **550** |
| **0°C** | **700** | **600** | **570** | **530** | **500** |
| **-20°C** | **450** | **102** | **140** | **70** | **190** |
| **-40°C** | **90** | **66** | **60** | **40** | **55** |
| **MEF Mpa** | **900** | **870** | **880** | **920** | **860** |
| **Stress at peak Mpa** | **21** | **20** | **21** | **21** | **20** |
| **Strain at peak %** | **18** | **17** | **18** | **18** | **18** |
| **Stress at break Mpa** | **4** | **4** | **5** | **5** | **5** |
| **Strain at break %** | **430** | **480** | **530** | **510** | **520** |
| NOTE: The polypropylene used has a melt flow index of 13. | | | | | |

**TABLE 4**

| Concentration of elastomer 20% by weight | | | | | |
|---|---|---|---|---|---|
| | **Branched** | **Polymer 10** | **Polymer 11** | **Polymer 12** | **Polymer 13** |
| **MFI 230°C 2.16 Kg** | **9** | **10** | **8** | **13** | **10** |
| **5.00 Kg** | **38** | **46** | **34** | **54** | **45** |
| **Vicat 1 kg (°C)** | **135** | **134** | **134** | **135** | **134** |
| **HDT 0.46 MpA (°C)** | **81** | **79** | **80** | **80** | **79** |
| **Izod notched** | | | | | |
| **23°C J/m** | **680** | **500** | **550** | **580** | **570** |
| **0°C** | **354** | **111** | **230** | **136** | **280** |
| **-20°C** | **139** | **68** | **70** | **67** | **85** |
| **-40°C** | **85** | **48** | **45** | **42** | **50** |
| **MEF Mpa** | **890** | **873** | **880** | **890** | **870** |
| **Stress at peak Mpa** | **22** | **20** | **20** | **22** | **21** |
| **Strain at peak %** | **5** | **5** | **4** | **6** | **5** |
| **Stress at break Mpa** | **13** | **17** | **17** | **18** | **18** |
| **Strain at break %** | **155** | **100** | **250** | **310** | **280** |
| NOTE: The polypropylene used has a melt flow index of 20. | | | | | |

**TABLE 5**

| Concentration of elastomer 20% by weight | | | | | |
|---|---|---|---|---|---|
| | **Branched** | **Pol. 10** | **Pol. 11** | **Pol. 12** | **Pol. 13** |
| **MF1230°C 2.16 Kg** | **20** | **21** | **19** | **25** | **20** |
| **5.00 Kg** | **93** | **86** | **84** | **109** | **90** |
| **Vicat 1 kg (°C)** | **137** | **134** | **132** | **135** | **133** |
| **HDT 0.46 MpA (°C)** | **71** | **72** | **71** | **85** | **73** |
| **Izod notched** | | | | | |
| **23°C J/m** | **2600** | **70** | **120** | **138** | **128** |
| **0°C** | **158** | **50** | **60** | **87** | **84** |
| **-20°C** | **139** | **36** | **38** | **65** | **50** |
| **-40°C** | **88** | **35** | **30** | **45** | **35** |
| **MEF Mpa** | **1060** | **870** | **900** | **990** | **880** |
| **Stress at peak Mpa** | **19** | **18** | **17** | **19** | **19** |
| **Strain at peak %** | **18** | **17** | **16** | **16** | **16** |
| **Stress at break Mpa** | **7** | **3** | **3** | **3** | **3** |
| **Strain at break %** | **43** | **27** | **80** | **130** | **90** |
| NOTE: The polypropylene used has a melt flow index of 45. | | | | | |

### Comments on Tables 3-5

The data indicated in Tables 3-5 clearly show how the impact properties (see Izod data, in particular at low temperatures) are much better for compositions based on polypropylene containing the branched composition of the present invention.

## Claims

1. Elastomeric pellets comprising:
(A) An EP(D)M elastomeric polymer having a content of bound propylene of at least 30% by weight;
(B) polyethylene;
the weight ratio between the two components (A) / (B) ranging from 80/20 to 95/5.

2. The elastomeric pellets according to claim 1, wherein the elastomeric polymer (A) has a content of bound propylene ranging from 31 to 40% by weight.

3. The elastomeric pellets according to claim 1, wherein the weight ratio between the two components (A) / (B) ranges from 85/15 to 88/12.

4. The elastomeric pellets according to claim 1, wherein the polyethylene (B) is selected from polyethylenes belonging to the group LLDPE.

5. The elastomeric pellets according to claim 4, wherein the LLDPE polyethylene has a melt flow rate at 190°C/2.16 Kg ranging from 10 to 13 and a density at 23°C of about 0.91 gr/cm³.

6. A process for the preparation of the pellets according to claim 1, which comprises the treatment of one or more peroxides, under high shear conditions, at a temperature ranging from 180°C to 260°C, of an elastomeric composition comprising:
i) a first elastomer (A) selected from EP(D)M polymers having a content of bound propylene ranging from 22% to 35% by weight;
ii) a second elastomer (B) selected from EP(D)M polymers having a content of bound propylene ranging from 45% to 55% by weight;
iii) polyethylene;
the quantity of the above components, their sum being 100, being:
** elastomer (A) from 40 to 60% by weight;
** elastomer (B) from 38 to 42% by weight;
** polyethylene from 7 to 13% by weight.

7. The process according to claim 6, wherein the temperature ranges from 200°C to 240°C.

8. The process according to claim 6, wherein the first elastomer (A) is selected from EP(D)M polymers having a content of bound propylene ranging from 26% to 30% by weight.

9. The process according to claim 6, wherein the second elastomer (B) is selected from EP(D)M polymers having a content of bound propylene ranging from 49% to 52% by weight.

10. The process according to claim 6, wherein, the sum of the three components A + B + polyethylene being 100,
** elastomer (A) is present in a quantity ranging from 45 to 55% by weight;
** elastomer (B) is present in a quantity ranging from 38 to 42% by weight;
** the polyethylene is present in a quantity ranging from 7 to 13% by weight.

11. The process according to claim 6, wherein the peroxide is used in a quantity ranging from 0.2 to 5% by weight with respect to the polymeric composition.

12. The process according to claim 11, wherein the peroxide is used in a quantity ranging from 0.5 to 3% by weight with respect to the polymeric composition.

13. The process according to claim 6, wherein the process is carried out at a shear ranging from 500 sec⁻¹ to 1,000 sec⁻¹.

14. The process according to claim 6, wherein the process is carried out at a shear ranging from 400 sec⁻¹ to 700 sec⁻¹.

15. The process according to claim 6, wherein the polyethylene is selected from those belonging to the group of LLDPE.

16. The process according to claim 6, wherein both the elastomers A and B are selected from EPM polymers, i.e. ethylene/propylene copolymers.

17. Use of the elastomeric composition in pellet form according to claim 1, as an improver of the impact-resistant properties of polyalpha-olefins.

18. Use of the elastomeric composition in pellet form according to claim 1, as an improver of the impact-resistant properties of polypropylene.

19. Impact-resistant compositions comprising polyolefins and elastomeric material, wherein:
(i) the polyolefin is polypropylene;
(ii) the elastomeric material comprises (a) an EP(D)M elastomeric polymer having a content of bound propylene of at least 30% by weight; (b) polyethylene; the weight ratio between the two components (a)/(b) ranging from 80/20 to 95/5.

20. The impact-resistant compositions according to claim 19, wherein, the sum of (i) and (ii) being 100, the polypropylene is present in a quantity ranging from 50% by weight to 95% by weight.

21. Impact-strength compositions according to claim 20, wherein the polypropylene is present in a quantity ranging from 70% by weight to 90% by weight.
